# EUROPÄISCHE PATENTSCHRIFT

(11) **EP 0 498 308 B1**
(45) Veröffentlichungstag und Bekanntmachung des Hinweises auf die Patenterteilung: **12.06.1996**
(21) Anmeldenummer: 92101573.1
(22) Anmeldetag: 30.01.1992
(51) Int. Cl.: G02B 6/44

(54) **Optisches Kabel und Verfahren zu dessen Herstellung**
Optical cable and method of its fabrication
Câble optique et procédé de sa fabrication

(30) Priorität: 06.02.1991 DE 4103587
(43) Veröffentlichungstag der Anmeldung: 12.08.1992
(73) Patentinhaber: SIEMENS AKTIENGESELLSCHAFT, D-80333 München (DE)
(72) Erfinder: Förtsch, Johann, Dipl.-Ing. (FH), W-8640 Kronach (DE)

(56) Entgegenhaltungen:
- EP-A- 0 253 457
- EP-A- 0 356 786
- EP-A- 0 417 384
- DE-A- 2 832 441
- DE-A- 3 000 674
- DE-A- 3 926 593
- US-A- 4 361 381
- US-A- 4 695 128

## Beschreibung

Die Erfindung betrifft ein optisches Kabel mit einer Kabelseele, in der eine Anzahl von jeweils mehrere Lichtwellenleiter enthaltenden Bändchen angeordnet sind, die sich mit ihrer Breitseite im wesentlichen in radialer Richtung nach außen erstrecken.

Ein Kabel dieser Art ist aus der US 4 695 128 bekannt, bei dem jeweils Lichtwellenleiter lose in Röhrchen untergebracht sind. Diese Röhrchen erstrecken sich in der Kabelseele im wesentlichen in radialer Richtung, um die Packungsdichte an Bändchen in der Kabelseele zu erhöhen.

In der älteren, nicht vor veröffentlichten EP 0 417 384 A2 ist ein optisches Kabel beschrieben, das um ein Zentralelement sich radial nach außen erstreckende, bandförmige Verseilelemente aufweist. In deren Umhüllungsmaterial liegen jeweils Lichtwellenleiter gleichartig mit Überlänge nebeneinander.

Aus der EP 0 253 457 A3 ist ein Verfahren zur Herstellung eines optischen Flachbandkabels bekannt, wobei alle Lichtwellenleiter des herzustellenden Flachbandkabels jeweils in der gleichen Art und Weise über ein kreiszylinderförmiges Rollensystem geführt werden und deshalb in diesem im wesentlichen die gleiche Länge aufweisen.

Aus der EP-A1 0 356 786 ist ein optisches Kabel bekannt, bei dem Bändchen im wesentlichen in Umfangsrichtung angeordnet sind.

Der Erfindung liegt die Aufgabe zugrunde, ein optisches Kabel zu schaffen, in dessen Kabelseele die Lichtwellenleiter von Bändchen möglichst beanspruchungsarm angeordnet sind.

Gemäß der Erfindung, welche sich auf ein optisches Kabel der eingangs genannten Art bezieht, wird diese Aufgabe dadurch gelöst, daß die Lichtwellenleiter im vorgefertigten Bändchen derart eingebracht sind, daß die in radialer Richtung gesehen außenliegenden Lichtwellenleiter des Bändchens eine größere Länge aufweisen als dessen innenliegende Lichtwellenleiter.

Da eine radiale Anordnung der Bändchen eine starke Stauchung des bzw. der im Kabel jeweils innen liegenden Lichtwellenleiter und eine starke Dehnung des/der jeweils außen liegenden Lichtwellenleiter zur Folge hätte, ist bei der Erfindung die Bändchenstruktur von vornherein nicht mehr geradlinig ausgebildet, sondern so,daß die im fertigen Kabel innen liegenden Lichtwellenleiter eines Bändchens eine kleinere Länge aufweisen und die außen liegenden eine größere Länge. Für eine gegebene Lage des Bändchens innerhalb der Kabelseele kann von vornherein berechnet werden, wieviel länger die Lichtwellenleiter jeweils innerhalb des Bändchens (von innen nach außen gestaffelt) sein müssen, damit eine möglichst weitgehend längsspannungsfreie Einbringung der Bändchen in die Kabelseele möglich ist. Dies hat den weiteren Vorteil, daß durch die Verseilung (Gleich- oder Wechselschlag) keine nennenswerten Faserdehnungen erzeugt werden. Außerdem werden Führungs- oder Stützelemente nicht mehr zwingend oder nur in geringeren Maße erforderlich.

Ein Vorteil der erfindungsgemäßen Struktur besteht darin, daß bei einem Biegevorgang die jeweils in der neutralen Ebene liegenden Bändchen überhaupt nicht beansprucht werden, da die Biegeebene dort ebenfalls radial verläuft. Dagegen werden zwar die beim Biegen außen liegenden Bändchen etwa im Bereich senkrecht zur Biegeebene zunächst einer Beanspruchung beim Biegevorgang unterworfen. Dies ist jedoch insofern nicht kritisch, weil bereits durch die vorgegebene Überlänge eine weitgehend spannungsfreie Einbringung der Bändchen gewährleistet ist. Darüber hinaus besteht die Möglichkeit, daß bei einem besonders starkem Biegevorgang sich die einzelnen Bändchen lamellenartig etwa aus ihrer radialen Position in eine weniger genau radiale Position verlagern und dadurch auf einer "kürzeren" Bahn verlaufen und somit weniger gedehnt werden. Hierzu ist im Bereich der Außenbahn ein kleiner Spalt zweckmäßig.

Es ist auch möglich, die Lichtwellenleiter-Bändchen im nicht gebogenen (d.h. im geradlinig verlaufenden) Kabel nicht exakt radial anzuordnen, sondern innerhalb eines Winkelbereiches von etwa ± 20° bei SZ-verseilten Seelen bzw. ± 70° bei gleichschlag verseilten Seelen zur radialen Richtung unterzubringen. Dies hat den Vorteil, daß beim Biegevorgang die Bändchen in der Außenbahn sich besonders leicht weiter von der exakt radialen Richtung entfernen können und somit weniger Zugspannungen aufnehmen.

Die Erfindung betrifft weiterhin ein Verfahren zur Herstellung von Bändchen für ein optisches Kabel nach einem der vorhergehenden Ansprüche, wobei eine Anzahl von Einzel-Lichtwellenleitern einer Beschichtungsvorrichtung zugeführt werden, welche zur Aufbringung der den Zusammenhalt der Einzel-Lichtwellenleiter gewährleistenden Umhüllung dient, wobei innerhalb einer gegebenen Zeit für die später im Kabel radial außen liegenden Lichtwellenleitr eine größere Länge an Beschichtungsmaterial aufgebracht wird als für die später im Kabel radial weiter innen liegenden Lichtwellenleiter, und daß die später im Kabel radial außen liegenden Lichtwellenleiter beim Beschichtungsvorgang zum jeweilig herzustellenden Bändchen mit einer größeren Länge als die später radial innen leigenden Lichtwellenleiter in das jeweilige Bändchen eingebracht werden.

Dadurch, daß diejenigen Lichtwellenleiter, die später im Kabel radial weiter außen liegen, in der Beschichtungsvorrichtung auf einer größeren Bahnlänge geführt und mit einer größeren Bahnlänge an Beschichtungsmaterial beschichtet werden, als die später im Kabel radial weiter innen liegenden Lichtwellenleiter, wird jeweils ein Bändchen mit einer gleichmäßig gekrümmten Gestalt gebildet, so daß die Lichtwellenleiter des jeweiligen Bändchens weitgehend längsspannungsfrei in die Kabelseele eines Kabels eingebracht werden können.

Die Erfindung betrifft weiterhin ein Verfahren zur Herstellung eines optischen Kabels, wobei solche erfindungsgemäßen Bändchen in eine radial bezogen auf Kabelachse verlaufende Anordnung gebracht werden derart, daß in Umfangsrichtung gesehen eine möglichst dichte Packung erreicht wird.

Bei der Herstellung eines optischen Kabels nach der Erfindung wird so vorgegangen, daß die Bändchen in eine im wesentlichen radial bezogen auf die Kabelachse verlaufende Anordnung gebracht werden, derart daß in Umfangsrichtung gesehen, eine möglichst dichte Packung erreicht wird.

Sonstige Weiterbildungen der Erfindung sind in Unteransprüchen wiedergegeben.

Die Erfindung und ihre Weiterbildungen werden nachfolgend anhand von Zeichnungen näher erläutert.

Es zeigen:
- Fig. 1: im Querschnitt ein erstes Ausführungsbeispiel eines optischen Kabels nach der Erfindung,
- Fig. 2: eine Abwandlung der Anordnung des optischen Kabels nach Fig. 1 mit größerer Packungsdichte,
- Fig. 3: eine Abwandlung der Bändchenanordnung nach Fig. 2,
- Fig. 4: die Anordnung etwa keilförmig ausgebildeter Bändchenstrukturen,
- Fig. 5: eine ebenfalls keilförmig ausgebildete Bändchenstruktur abwechselnd zusammen mit rechteckförmigen Bändchen,
- Fig. 6: die Anordnung erfindungsgemäß aufgebauter Lichtwellenleiterbändchen in einem Kammerkabel mit nach außen offenen Kammern,
- Fig. 7: die Anordnung erfindungsgemäß ausgebildeter Lichtwellenleiterbändchen in einem Kammerkabel mit nach innen offenen Kammern,
- Fig. 8: die Anordnung mehrfach geschichteter Bändchenstrukturen,
- Fig. 9 und Fig. 10: mögliche Ausgleichsvorgänge der Bändchen beim Biegen,
- Fig. 11: eine Fertigungseinrichtung zur Herstellung eines für ein erfindungsgemäßes Kabel einsetzbaren Bändchens,
- Fig. 12: einen Ausschnitt der Anordnung nach Fig. 11,
- Fig. 13: ein weiteres Ausführungsbeispiel zur Herstellung eines Bändchens für ein optisches Kabel in Draufsicht,
- Fig. 14: die Anordnung nach Fig. 13 in Seitenansicht und
- Fig. 15: ein erfindungsgemäß aufgebautes optisches Kabel mit gemischter radialer und tangentialer Anordnung von Bändchen.

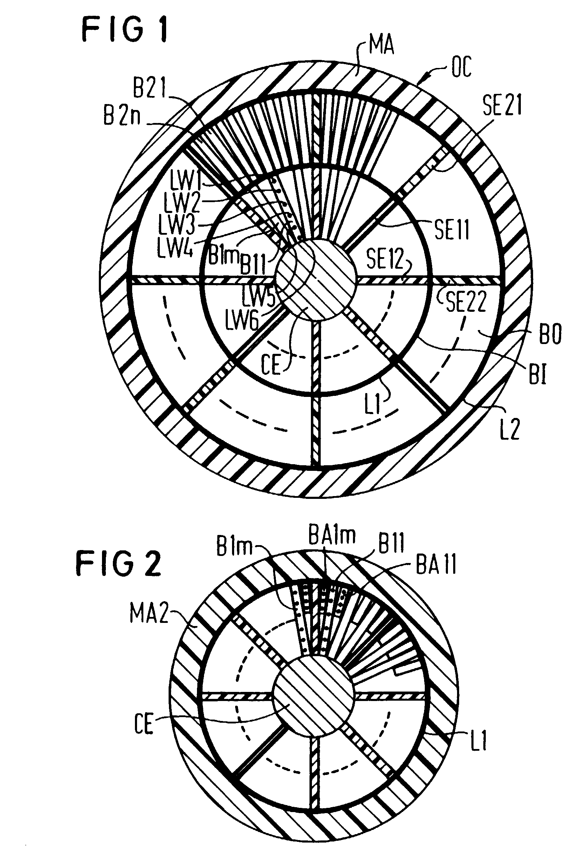

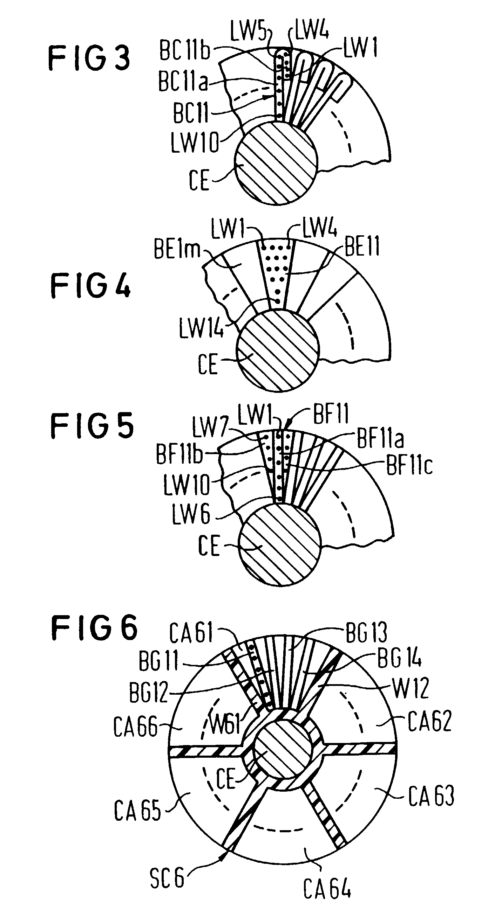

In Fig. 1 ist ein optisches Kabel im Querschnitt dargestellt, das ein zugfestes gegebenenfalls beschichtetes Kernelement CE, z.B. aus Stahl oder hochzugfesten Kunststoff aufweist. Um dieses Zentralelement CE herum, sind in radialer Anordnung m Bändchen angebracht, die mit BDll-BDlm bezeichnet sind. Dabei bedeutet "in radialer Richtung verlaufend" daß die Breitseiten der Bändchen sich im wesentlichen in radialer Richtung erstrecken. Es ist aber möglich, daß eine Abweichung von der exakt radialen Richtung um ± 20° bei SZ-Verseilung bzw. ± 70° bei Gleichschlagverseilung erfolgt, wie später noch genauer beschrieben werden wird. Innerhalb eines Bändchens ist eine vorgegebene Anzahl von Lichtwellenleiter angeordnet, wobei im vorliegenden Beispiel angenommen wird, daß ein Bändchen jeweils vier Lichtwellenleiter enthält. Diese sind für das Bändchen BDll mit LW1-LW4 bezeichnet. Der Zusammenhalt des Bändchens erfolgt durch eine gemeinsame Umhüllung aus Kunststoff. Die Bändchen sind so angeordnet, daß die Stirnseiten ihrer Schmalseiten direkt auf dem Zentralelement CE (das durch eine hier nicht dargestellte Kunststoffbeschichtung oder dergleichen aufweisen kann) unmittelbar aneinanderstoßend auftreffen, so daß eine äußerst dichte Packung der Lichtwellenleiterbändchen erzielt wird.

Es ist zweckmäßig, die radiale Ausdehnung der Lichtwellenleiterbändchen nicht allzu groß zu machen; vorteilhaft sind in einem derartigen Bändchen zwischen 4 und 12 Lichtwellenleiter untergebracht. Die sich ergebende insgesamt etwa speichen- oder strahlenförmige Struktur der Lichtwellenleiterbändchen kann außen durch eine Beschichtung oder Bewicklung (oder Schutzrohr) L1 abgeschlossen sein, wobei wenn nur eine derartige Lage von Bändchen angebracht werden soll, auf die Beschichtung oder Bewicklung BS unmittelbar ein Kabelmantel aufgebracht wird.

Wenn Kabel mit ganz besonders hohen Faserzahlen erforderlich sind, kann mindestens eine weitere Lage BO ebenfalls im wesentlichen radial verlaufender Bändchen vorgesehen werden, die im vorliegenden Beispiel die gleichen Abmessungen haben wie die Bändchen BD11-BD1m der Innenlage BF. Diese Bändchen der zweiten, ebenfalls radial verlaufenden Lage (Außenlage) BO sind mit B21-B2n bezeichnet. Nach einer weiteren Zwischenlage L2 kann z.B. ein ein- oder mehrschichtiger Außenmantel MA aufgebracht werden oder es kann eine weitere (hier nicht dargestellte) Lage von Lichtwellenleiter-Bändchen in radialer Anordnung aufgebracht werden.

Um zu verhindern, daß die Lichtwellenleiter, z.B. bei nicht ausreichend druckfesten Außenmänteln MA einer radialen Kompression unterworfen werden, können Stützelemente vorgesehen werden, die zweckmäßig ebenfalls radial verlaufen. Zwischen diesen Stützelementen liegt jeweils eine größere Anzahl von Bändchen gegebenenfalls in Form eines Bändchenstapels. Die Stützelemente selbst können als lose Elemente ausgebildet sein (im vorliegenden Beispiel mit SE1 und SE2 bezeichnet) und beispielsweise aus einem Kunststoffmaterial hergestellt werden. Sie bilden eine Art von tragendes Gerüst für die Bespinnung oder Bewicklung L1 bzw. LW2 und den Mantel MA.

Auch in der zweiten Lage BO von radial angeordneten Bändchen B21-B2n können radiale Stützelemente vorgesehen werden, die mit SE21 und SE22 bezeichnet sind. Die jeweiligen Stützelemente der inneren Lage BI (SE11 und SE12) und die der äußeren Lage BO (SE21 und SE22) werden zweckmäßigerweise in radialer Richtung fluchtend angeordnet, so daß eine durchgehende tragende Struktur erhalten wird.

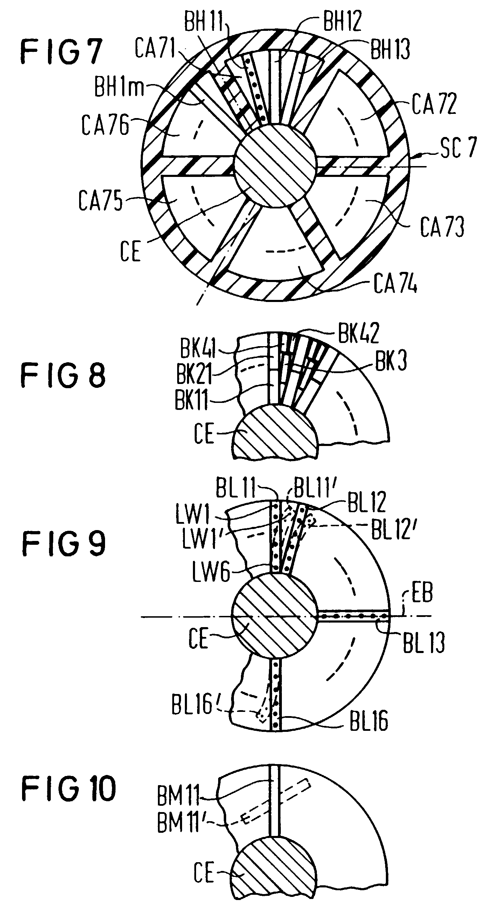

Weitere Möglichkeiten für die Anordnung tragender Strukturen sind in den Figuren 6 und 7 dargestellt und werden später näher erläutert.

Bei der Anordnung nach Fig. 2 ist ein optisches Kabel dargestellt, bei dem die Packungsdichte gegenüber Fig. 1 erhöht wird. Während die Grundstruktur der von Fig. 1 entspricht, d.h. es sind m radial verlaufende Bändchen B11-B1m vorhanden, werden die sich bildenden und nach außen hin sich verbreiternden Spalte zwischen aufeinanderfolgenden Bändchen BA11-BA1m durch zusätzliche kleinere Bändchen BA11-BA1m zumindest teilweise aufgefüllt. Diese Bändchen BA11-BA1m enthalten natürlich eine geringere Zahl von Lichtwellenleiter als die Bändchen B11-B1m. Im Gegensatz zur Anordnung nach Fig. 1 ist der Mantel MA2 hier direkt auf die einlagige Folge von Bändchen B11-B1m und BA11-BA1m aufgebracht; eine etwaige Bespinnung oder Bewicklung ist hier zur Vereinfachung der Zeichnung nicht dargestellt.

Fig. 3 zeigt eine weitere Möglichkeit, eine dichtere Packung und damit eine bessere Nutzung des Querschnitts der Kabelseele zu erreichen. Das radial auf dem Zentralelement CE aufsitzende Bändchen BC11 weist einen ersten Teil auf, der sich über die volle Breite einer Lage von Bändchen erstreckt und der mit BC11a bezeichnet ist. Im äußeren, mit BC11b bezeichneten Bereich, ist das Bändchen BC11 nach innen umgebogen und ergibt somit eine zusätzliche Füllung der keilförmigen Spalte zwischen aufeinander folgenden Bändchen. Es ergibt sich insgesamt eine ähnliche höhere Packungsdichte wie bei der Anordnung nach Fig. 2. Die Lichtwellenleiter LW1-LW4 liegen im Bereich des abgeknickten Teils BC11b, während die Lichtwellenleiter LW5-LW10 im über die volle Breite reichenden Teilbereich BC11a liegen.

Wie aus der schematischen Darstellung nach Fig. 4 ersichtlich ist, läßt sich die Packungsdichte der Lichtwellenleiter noch weiter steigern, wenn Bändchen verwendet werden, deren Querschnitt bereits von Haus aus keilförmig bzw. segmentförmig ausgebildet ist. Auch dabei wird in einer geschlossenen Lage die gesamte Kabelseele mit derartigen keilförmigen Bändchen gefüllt, wobei im vorliegenden Beispiel nur zwei derartige keilförmige Bändchen näher dargestellt und mit BE11 und BE1m bezeichnet sind. Bei dem Bändchen BE11 sind die Lichtwellenleiter mit eingezeichnet, wobei in der äußersten Lage vier Lichtwellenleiter LW1-LW4 längs einer Umfangslinie liegen, worauf zwei Lagen mit je drei Lichtwellenleitern, dann eine Lage mit zwei Lichtwellenleitern und zwei weiteren Lagen mit je einem Lichtwellenleiter angeordnet oder vorgesehen sind. Der innerste Lichtwellenleiter ist mit LW14 bezeichnet; insgesamt sind somit in einem derartigen segmentförmigen Abschnitt BE11 jeweils 14 Lichtwellenleiter untergebracht. Diese Zahl ist höher als z.B. die der vergleichbaren Anordnung nach Fig. 3 oder Fig. 2.

Eine weitere Möglichkeit zu einem möglichst gedrängten Aufbau zu gelangen und damit eine hohe Packungsdichte zu gewährleisten ist in Fig. 5 dargestellt. Hier ist ein erstes Bändchen BF11a vorgesehen, das etwa rechteckförmigen Querschnitt aufweist, also den Bändchen nach den Figuren 1 und 2 entspricht und sechs Lichtwellenleiter LW1-LW6 enthält. Für die entstehenden Zwickelbereiche sind etwa keilförmig ausgebildete Bändchen vorgesehen, die im vorliegenden Beispiel mit BF11 und BF11c bezeichnet sind und jeweils vier Lichtwellenleiter LW7-LW10 enthalten. Der Vorteil einer derartigen Anordnung besteht darin, daß bei derartig schmalen Strukturen die Lichtwellenleiter nicht so dicht mehrlagig gepackt vorliegen müssen, wie bei den Strukturen nach Fig. 4. Alle Bändchenarten BF11a, BF11b enthalten zweckmäßig eine Reihe von durch Punkte angedeuteten Lichtwellenleiter LW1-LW6 bzw. LW7-LW10. Und zwar ist es dann notwendig zwei verschiedene Grundbausteine, nämlich die rechteckigen Bändchen BF11b auf Vorrat zu halten (BF11b und BF11c) sind gleich ausgebildet. Insgesamt ergibt sich aber ein sehr gedrängter Aufbau mit hohem Füllungsgrad, einer guten Beweglichkeit der einzelnen Elemente BF11a, BF11b und BF11c gegeneinander, wobei im vorliegenden Beispiel, d.h. daß ebenso wie bei den vorangegangenen Figuren stets Gleitvorgänge zwischen aufeinanderfolgenden Bändchen möglich sind.

Bei der Struktur nach Fig. 6 ist um das zugfeste Zentralelement CE ein Kernelement SC6 vorgesehen (vorzugsweise durch Extrudieren hergestellt), so daß der Aufbau eines üblichen "Kammerkabels" erhalten wird. Die durch die Trennwände gebildeten, nach außen offenen Kammern CA61-CA66 werden durch sich in radialer Richtung erstreckende Bändchen gefüllt, wobei im vorliegenden Beispiel für die Kammer CA61 die Bändchen BG11-BG14 dargestellt sind. Eine derartige Kabelstruktur hat die tragenden Eigenschaften eines herkömmlichen Kammerkabels, wobei die Betrachtung auch so erfolgen kann, daß die die Kammern CA61-CA66 bildenden Zwischenwände (z.B. W12 und W61) etwa den Stützelementen SE11 und SE12 nach Fig. 2 entsprechen.

Die Anordnung nach Fig. 7 ist ähnlich der von Fig. 6, wobei lediglich die Kammern des vorzugsweise durch Extrusion hergestellten Kernelementes SC7 nach innen offen sind und dementsprechend z.B. bei der Kammer CA71 radial verlaufende Bändchen BH11, BH12 und BH13 aufnehmen. Es ist auch möglich die einzelnen Kammern oder eine Gruppe von Kammern jeweils in einem getrennten Element unterzubringen, also nicht ein einziges Zentralelement vorzusehen, sondern diese einzelne Bausteine mit etwa segmentförmigem Querschnitt getrennt zu erzeugen. In diesem Fall müßten längs der strichpunktierten Linien Trennfugen vorgesehen sein und die Gesamtanordnung würde aus einer Reihe von Teil-Segmenten zusammengesetzt.

In Fig. 8 ist angedeutet, wie einzelne Bändchen ineinander gestapelt oder geschichtet werden können. Neben den breiteren radial angeordneten Bändchen BK11 und BK21 sind die keilförmigen Lücken durch in der Zahl nach außen zunehmende schmalere Bändchen BK3 sowie die nebeneinanderliegenden Bändchen BK41 und BK42 fortlaufend aufgefüllt.

In Fig. 9 ist dargestellt, was geschieht, wenn eine Biegung um eine Biegeebene EB (die durch die Achse des zugfesten Elementes CE verläuft) hinsichtlich der Bändchenstrukturen geschieht. Das Bändchen BL13 liegt genau in der Biegeebene EB und wird somit nicht weiter mechanisch beansprucht. Dagegen ist das im wesentlichen senkrecht zur Biegeebene EB verlaufende Bändchen BL11 ebenso wie das diametral gegenüberliegende Bändchen BL16 mit seinem äußersten Lichtwellenleiter LW1 bei einem Biegevorgang einer mechanischen Zugbeanspruchung unterworfen. Diese mechanische Zugbeanspruchung kann sich dadurch verringern, daß das Bändchen in einer Richtung quer zur radialen Richtung ausweicht und etwa die gestrichelte Position BL11' einnimmt. In dieser Position liegt der äußerste Lichtwellenleiter LW1' auf einer Bahn in einem geringerem Abstand von der Ebene EB und wird somit bei einer Biegung weniger auf Zug beansprucht. Für diesen "Ausweichvorgang" können zweckmäßig die mehr oder weniger großen verbleibenden Restspalte zwischen den einzelnen aufeinanderfolgenden radial angeordneten Bändchen, z.B. BL11, BL12 usw. herangezogen werden. Das nächstfolgende Bändchen BL12 wandert in eine etwas geringer ausgelenkte Position BL12', während die Auslenkung beim diametral gegenüberliegenden Bändchen BL16 in die Position BL16' dem des Bändchens BL11 (mit der Position BL11') entspricht.

Normalerweise haben alle verseilten Elemente, die sich in Längsrichtung frei bewegen können, beim Biegen den Effekt des Längenausgleichs, da jedes Element einmal außen (= Dehnbereich) und einmal innen (= Stauchbereich) zum liegen kommt. Die geschilderten Ausweichbewegungen werden deshalb bevorzugt dann auftreten, wenn eine Haftung zwischen den Bändchen auftritt. Da die umliegende Kante der Bändchen nicht ausweichen kann, müßten die Fasern oberhalb der Biegeachse EB gedehnt und unterhalb der Biegeachse EB gestaucht werden. Diese Kräfte sind jedoch so groß, daß die im allgemeinen geringen Haftkräfte zwischen den Bändchen überwunden werden und sich ein Längenausgleich durch Verschieben der Bändchen in Richtung der Kabel-Längsachse einstellt.

In Fig. 10 ist ein (bei nicht zu dichter Packung) sich ergebende Struktur dargestellt. Das Bändchen BM11 kann beim Biegevorgang nicht nur in seinem Außenbereich mehr nach innen, sondern vom Innenbereich auch nach außen gelangen, wie es das schematisch dargestellte, gestrichelt gezeichnete Bändchenstruktur BM11' andeutet.

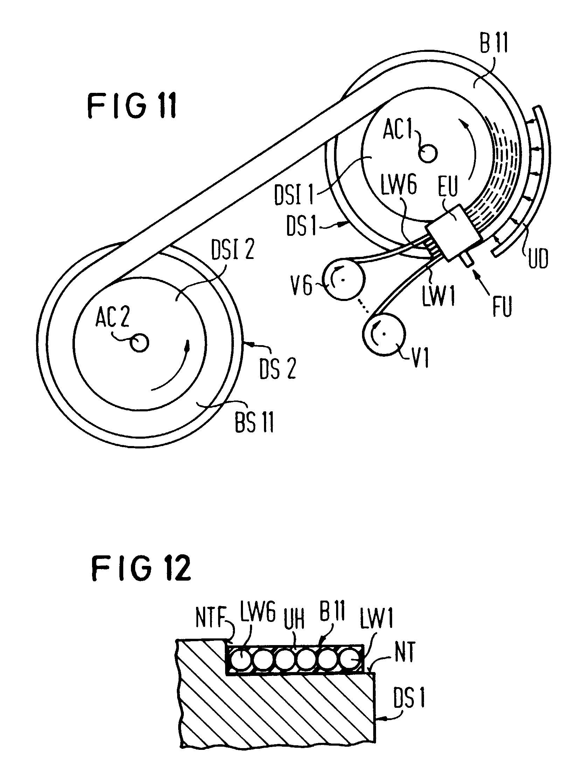

In Fig. 11 ist eine Vorrichtung dargestellt, mit dem die besondere Art der Beschichtung der einzelnen Lichtwellenleiter vorgenommen wird, um die für den Aufbau erfindungsgemäßer Kabel erforderliche spezielle Bändchenstruktur zu erhalten. Im einzelnen ist dargestellt, wie z.B. das Bändchen BD11 nach Fig. 1 hergestellt wird, wobei darauf hinzuweisen ist, daß alle anderen Bändchen selbstverständlich den gleichen Aufbau und die gleiche Struktur aufweisen, so daß sie in der gleichen Weise herzustellen sind. Die einzelnen Lichtwellenleiter LW1-LW6 des Bändchens BL11 sind auf Vorratsspulen V1-V6 angeordnet und werden von diesen abgezogen und einer Beschichtungseinrichtung EU zugeführt. Diese Beschichtungseinrichtung EU erzeugt eine gemeinsame Umhüllung UH für die Lichtwellenleiter, die aus der Schnittdarstellung nach Fig. 12 deutlicher ersichtlich ist. Das Material FU für die Umhüllung UH kann aus einem Schmelzkleber, einem Plastikmaterial oder dergleichen bestehen; es ist auch möglich z.B. nur die aneinanderstoßenden Seitenbereiche der einzelnen Lichtwellenleiter LW1-LW6 miteinander, z.B. durch einen Kleber zu verbinden. Auf jeden Fall ist die Umhüllung UH so auszugestalten, daß das Bändchen im fertigen Zustand ausreichend flexibel bleibt.

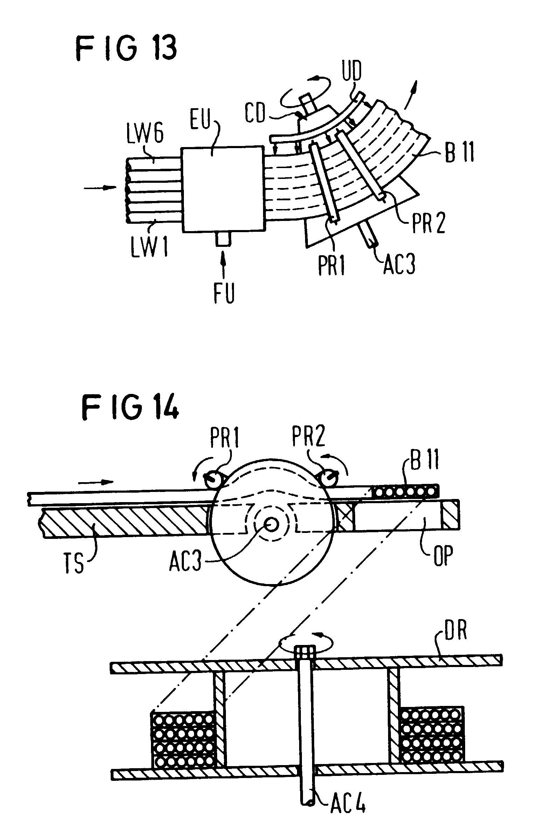

Nach dem Verlassen der Beschichtungseinrichtung EU gelangt das Bändchen B11 auf eine Scheibe DS1, die in ihrem Außenbereich mit einer Nut NT versehen ist. Diese Nut ist mindestens so breit wie die Breite des fertigen Bändchens BD11 und verläuft ebenfalls kreisförmig und symmetrisch zur Achse AC1. Da sich die Scheibe DS1 um die Achse AC1 dreht, ergibt sich für den Lichtwellenleiter LW1 eine größere Bahnlänge und fortlaufend nach innen für die anderen Lichtwellenleiter eine kleinere Bahnlänge, wobei die kleinste Bahnlänge dem Lichtwellenleiter LW6 zuzuordnen ist. Die Umhüllungseinrichtung EU ist etwa tangential zur Nut NT angeordnet und die Lichtwellenleiter LW1-LW6 werden weitgehend spannungsfrei in die Umhüllung UH eingebracht. Eine nachfolgende Trocknungs- bzw. Erhärtungseinrichtung (z.B. mit UV-Strahlen arbeitend) ist mit UD bezeichnet und bewirkt eine gleichmäßige Aushärtung der Lichtwellenleiter innerhalb der Umhüllung UH, wobei die Aushärtung im gekrümmten Bereich erfolgt, d.h. das fertige Bändchen (nach Durchlaufen der Härtungseinrichtung UD) hat eine gleichmäßig gekrümmte (säbelförmige) Gestalt. Die Gestalt im einzelnen ist festgelegt, durch den Durchmesser der Nutflanke NTF der Nut NT und die Breite des Bändchens BD11, d.h. durch die Anzahl der enthaltenen Lichtwellenleiter. Da das so erhaltene Bändchen BD11 eine säbelförmige bzw. runde Struktur aufweist, ist die Ablage bzw. Zwischenspeicherung ebenfalls zweckmäßig so vorzunehmen, daß diese möglichst spannungsfrei erfolgt. Das Bändchen kann hierzu z.B. auf einer Scheibe oder einem Teller DS1 aufgebracht werden, die ja ähnlich der Scheibe DS1 im rechten Teil der Fig. 11 ausgestaltet ist. Das Lichtwellenleiterbändchen B11 wird hier zu einem Stapel BS11 mit entsprechend vielen Lagen aufgewickelt. Es ist aber auch möglich, für die Aufwicklung des Bändchens B11 eine Trommel zu verwenden, d.h. der zentrale Teil DSI2 der Scheibe DS2 wäre dann das Kernelement einer Trommel DS2. Auf dieser Trommel wäre somit das Lichtwellenleiterbändchen BD11 "hochkant" aufgewickelt (vgl. auch Fig. 14).

In Fig. 13 und 14 ist eine weitere Einrichtung dargestellt, mit der den Bändchen die gewünschte säbelförmige Struktur aufgeprägt werden kann. Bei der Anordnung nach Fig. 13 werden die Lichtwellenleiter LW1-LW6 ebenso wie bei Fig. 11 von (hier nicht dargestellten) Vorratsspulen abgezogen und der ebenso wie bei Fig. 11 ausgebildeten Beschichtungseinrichtung EU zugeführt. Das am Ausgang der Beschichtungseinrichtung EU mit der Umhüllung UH versehene Lichtwellenleiterbändchen BD11 wird durch eine Härtungseinrichtung UD, ähnlich Fig. 11, geführt und im noch weichen Zustand über eine konisch ausgebildete Trommel CD geführt. Wie aus Fig. 14 ersichtlich ist, werden z.B. durch Andruckrollen PR1 und PR2 die einzelnen Lichtwellenleiter LW1-LW6 samt der Umhüllung UH fortlaufend gegen die schräg verlaufende Mantelfläche der konischen Trommel CD gepreßt. Dadurch ergibt sich analog zu Fig. 11 für den Lichtwellenleiter LW1 eine größere Bahnlänge innerhalb des Bändchens BD11 und für den Lichtwellenleiter LW6 die entsprechend kleinere Bahnlänge. Die Antriebswelle AC3 für die konische Trommel CD verläuft zweckmäßig horizontal, so daß die Fig. 13 eine Draufsicht darstellt, während die Fig. 14 die zugehörige Seitenansicht zeigt. Durch Veränderung der Lage der Antriebswelle AC3 schräg zur horizontalen Ebene kann die Krümmung der Bändchen in einfacher Weise variiert werden. Damit ist eine leichte Anpassung an die verschiedenen Verseilradien beim fertigen Kabel möglich. Wie aus Fig. 14 ersichtlich ist, wird die Trommel CD in die Öffnung eines Tisches TS eingelassen und das fertige Bändchen B11 würde somit nach dem Durchlaufen der Trommel CD auf dem Tisch TS abgelegt werden. Da jedoch für die Zwischenlagerung für das Bändchen B11 eine eigene Ablage bzw. ein Auftrommeln zweckmäßiger ist, weist der Tisch TS eine Öffnung OP auf, durch die das fertige, gekrümmte Bändchen B11 (- wie durch strichpunktierte Linie angedeutet -) nach unten eine über die Welle AC4 angetriebenen Trommel TR zugeführt wird, wobei ein lageweises Hochkant-Aufwickeln erfolgt.

In analoger Weise hätte auch bei der Anordnung nach Fig. 11 die Aufwickeltrommel DS2 unterhalb der Trommel DS1 angeordnet sein können und zwar räumlich etwas vor diese gesetzt, wodurch der geradlinig verlaufende Teil des Bändchens BD11 möglichst kurz gehalten werden könnte. Andererseits ist eine Beeinträchtigung des Bändchens in diesem geradlinigen Teil besonders dann nicht gegeben, wenn das Bändchen dort praktisch ohne Zugspannung verläuft, d.h. sich im Übergangsbereich in die gewünschte, möglichst spannungsfreie Position legen kann.

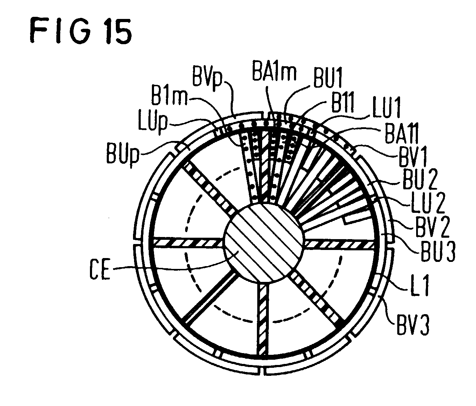

In Fig. 15 ist eine Kabelseele eines optischen Kabels dargestellt, dessen innerer Teil den gleichen Aufbau aufweist wie die Struktur nach Fig. 2. Deshalb sind auch die dort angewendeten Bezugszeichen übernommen; es ist aber auch möglich für den Bereich der Kabelseele irgendeine Struktur analog den Figuren 1 oder 3 bis 10 einzusetzen. Nach mindestens einer hier (inneren) Lage von radial verlaufenden Bändchen B11-B1m und dazwischen eingeschobenen weiteren kleineren Bändchen BA11-BA1m wird mindestens eine Lage von im wesentlichen in Umfangsrichtung verlaufenden Bändchen BU1-BUp angeordnet. Diese Bändchen werden ohne gegenseitige Überlappung aufgebracht, wobei es zweckmäßig sein kann, eine schmale Lücke LU1-LUp zwischen den Bändchen für Ausgleichsvorgänge oder dergleichen vorzusehen. Mit derartigen gemischten Strukturen lassen sich besonders hohe Packungsdichten erzielen und es ist auch eine einfache Anpassung an entsprechende Fertigungsvorgänge möglich. Etwaige weiter außen liegenden Lagen von zusätzlichen Bändchen können in radialer Richtung angebracht werden, also ähnlich der äußeren Lage B21-B21n nach Fig. 1 als Fortsetzung oder aufgesetzt auf die in Umfangsrichtung verlaufende Bändchenlage BU1-BUp. Es ist aber auch möglich, auf eine erste Lage von in Umfangsrichtung verlaufenden Bändchen BU1-BUp eine zweite Lage BV1-BVp ebenfalls in Umfangsrichtung verlaufend aufzuseilen, vorzugsweise mit entgegengesetzter Schlagrichtung.

## Patentansprüche

1. Optisches Kabel (OC) mit einer Kabelseele, in der eine Anzahl von jeweils mehrere Lichtwellenleiter (LW1-LW4) enthaltenden Bändchen (B11-B1m) angeordnet sind, die sich mit ihrer Breitseite im wesentlichen in radialer Richtung nach außen erstrecken,
**dadurch gekennzeichnet,**
daß die Lichtwellenleiter (LW1-LW4) im vorgefertigten Bändchen (B11) derart eingebracht sind, daß die in radialer Richtung gesehen außenliegenden Lichtwellenleiter (z.B. LW1) des Bändchens (B11) eine größere Länge aufweisen als dessen innenliegende Lichtwellenleiter (z.B. LW4).

2. Optisches Kabel nach Anspruch 1,
**dadurch gekennzeichnet,**
daß die Länge der Lichtwellenleiter von innen nach außen in genau dem Maße zunimmt, wie die zugehörige, vom Lichtwellenleiter im fertigen Kabel eingenommene Bahn länger ist als beim jeweils weiter innen liegenden Lichtwellenleiter.

3. Optisches Kabel nach einem der vorhergehenden Ansprüche,
**dadurch gekennzeichnet,**
daß die Lichtwellenleiterbändchen mit ihrem inneren Ende unmittelbar aneinanderstoßend angeordnet sind und daß sich weiter außen ein Spalt ergibt.

4. Optisches Kabel nach Anspruch 3,
**dadurch gekennzeichnet,**
daß in dem Spalt zwischen zwei benachbarten Lichtwellenleiterbändchen (B1m, B11) ein weiteres oder weitere Lichtwellenleiterbändchen (BA1m) angeordnet ist, dessen radiale Ausdehnung
geringer ist als die der beiden benachbarten Bändchen (B1m, B11).

5. Optisches Kabel nach einem der Ansprüche 3 oder 4,
**dadurch gekennzeichnet,**
daß zusätzliche schmalere Bändchen in den sich ergebenden Spalten so angeordnet sind, daß sie mit ihrem radial gesehenen inneren Ende an die breiteren Bändchen (B1m-B11) anstoßen.

6. Optisches Kabel nach Anspruch 5,
**dadurch gekennzeichnet,**
daß die schmaleren Bändchen (BF11b, BF11c) keilförmig gestaltet sind.

7. Optisches Kabel nach Anspruch 6,
**dadurch gekennzeichnet,**
daß die Gestalt der keilförmigen Bändchen so gewählt ist, daß keine Zwischenräume verbleiben, also sich eine geschlossene Struktur ergibt.

8. Optisches Kabel nach einem der Ansprüche 1 bis 6,
**dadurch gekennzeichnet,**
daß die Bändchen (BC11) im Außenbereich verdickt derart ausgebildet sind, daß innerhalb eines Bändchens außen mehr Lichtwellenleiter untergebracht werden können als im Innenbereich.

9. Optisches Kabel nach Anspruch 8,
**dadurch gekennzeichnet,**
daß die Bändchen (BC11) in ihrem Außenbereich umgefaltet ausgebildet sind.

10. Optisches Kabel nach Anspruch 8,
**dadurch gekennzeichnet,**
daß die Bändchen (BE11) eine keilförmige Struktur aufweisen derart, daß sie im Außenbereich verbreitert und im Innenbereich schmäler ausgebildet sind.

11. Optisches Kabel nach einem der Ansprüche 6 bis 10,
**dadurch gekennzeichnet,**
daß die keilförmigen Bändchen radial gesehen innen weniger Lichtwellenleiter und außen mehr Lichtwellenleiter aufweisen.

12. Optisches Kabel nach einem der vorhergehenden Ansprüche,
**dadurch gekennzeichnet,**
daß die Bändchen in einem Kernelement (SC6) untergebracht sind, das nach außen offene Kammern (CA61-CA66) aufweist, die zur Aufnahme der Bändchen dienen.

13. Optisches Kabel nach einem der Ansprüche 1 bis 11,
**dadurch gekennzeichnet,**
daß die Lichtwellenleiterbändchen in einem Kernelement (SC7) untergebracht sind, das nach innen offene Kammern (CA71-CA76) aufweist un daß in diese Kammern die Bändchen eingesetzt sind.

14. Optisches Kabel nach einem der vorhergehenden Ansprüche,
**dadurch gekennzeichnet,**
daß die Bändchen bei SZ-Verseilung in einem Winkelbereich von ± 20° bezogen auf die exakte radiale Richtung angeordnet sind.

15. Optisches Kabel nach den Ansprüchen 1 bis 13,
**dadurch gekennzeichnet,**
daß die Bändchen bei Gleichschlagverseilung in einem Winkelbereich von ± 70° bezogen auf die exakte radiale Richtung angeordnet sind.

16. Optisches Kabel nach einem der vorhergehenden Ansprüche,
**dadurch gekennzeichnet,**
daß in einem Bändchen zwischen 4 und 12 Lichtwellenleiter untergebracht sind.

17. Optisches Kabel nach einem der vorhergehenden Ansprüche,
**dadurch gekennzeichnet,**
daß mindestens ein zugfestes Element (CE) im Bereich der Kabelseele vorgesehen ist.

18. Optisches Kabel nach Anspruch 17,
**dadurch gekennzeichnet,**
daß das zugfeste Element (CE) im Zentrum der Kabelseele angeordnet ist.

19. Optisches Kabel nach einem der vorhergehenden Ansprüche,
**dadurch gekennzeichnet,**
daß in radialer Richtung sich erstreckende Abstandshalter (BI, BO) als Stützelemente vorgesehen sind.

20. Optisches Kabel nach einem der vorhergehenden Ansprüche,
**dadurch gekennzeichnet,**
daß mindestens eine weitere Lage von in Umfangsrichtung verlaufenden Bändchen (BU1-BUp) vorgesehen ist, die gemäß den Bändchen (B11 mit B1m) der Ansprüche 1 mit 19 ausgebildet und angeordnet sind.

21. Verfahren zur Herstellung von Bändchen für ein optisches Kabel nach einem der vorhergehenden Ansprüche, wobei eine Anzahl von Einzel-Lichtwellenleitern einer Beschichtungsvorrichtung zugeführt werden, welche zur Aufbringung der den Zusammenhalt der Einzel-Lichtwellenleiter gewährleistenden Umhüllung dient, wobei innerhalb einer gegebenen Zeit für die später im Kabel radial außen liegenden Lichtwellenleiter eine größere Länge an Beschichtungsmaterial aufgebracht wird als für die später im Kabel radial weiter innen liegenden Lichtwellenleiter, und wobei die später im Kabel radial außen liegenden Lichtwellenleiter beim Beschichtungsvorgang zum jeweilig herzustellenden Bändchen mit einer größeren Länge als die später radial innen liegenden Lichtwellenleiter in das jeweilige Bändchen eingebracht werden.

22. Verfahren nach Anspruch 21, wobei
das Lichtwellenleiterbändchen nach der Aufbringung der Umhüllung für die Lichtwellenleiter derart ringförmig abgelegt wird, daß die Lichtwellenleiter im wesentlichen zugspannungsfrei innerhalb des Bändchens verbleiben.

23. Verfahren nach Anspruch 22, wobei
eine Ablage auf einem Teller vorgenommen wird.

24. Verfahren nach Anspruch 22, wobei
eine Ablage auf einer Trommel vorgenommen wird derart, daß die später in der Kabelseele innen liegenden Lichtwellenleiter auf der Trommel ebenfalls innen aufliegen.

25. Verfahren zur Herstellung eines optischen Kabels nach einem der Ansprüche 1 bis 20, wobei Bändchen hergestellt nach einem der Ansprüche 21 mit 24 in eine radial bezogen auf die Kabelachse verlaufende Anordnung gebracht werden derart, daß in Umfangsrichtung gesehen eine möglichst dichte Packung erreicht wird.

26. Verfahren nach Anspruch 25, wobei
zuerst eine erste Lage (BI) von radial verlaufenden Bändchen in die Kabelseele eingebracht wird und daß auf diese erste Lage (BI) mindestens eine weitere Lage (BO) mit ebenfalls radial verlaufenden Bändchen aufgebracht wird.

27. Verfahren nach den Ansprüchen 25 bis 26, wobei
zuerst ein mit radial nach außen offenen Kammern versehenes Zentralelement (SC6) hergestellt wird und daß in die radial nach außen offenen Kammern, die sich mit ihrer Breitseite im wesentlichen in radialer Richtung erstreckenden Bändchen eingebracht werden.

28. Verfahren nach einem der Ansprüche 25 bis 27, wobei
ein Zentralkörper (SC7) vorgesehen ist, der radial nach innen offene Kammern (CA71-CA76) aufweist, in denen die Lichtwellenleiter-Bändchen mit ihrer im wesentlichen sich in radialer Richtung erstreckenden Breitseite angeordnet werden.

## Claims

1. Optical cable (OC) having a cable core in which there are arranged a number of ribbons (B11-B1m) which respectively include a plurality of optical waveguides (LW1-LW4) and extend outwards with their broad sides essentially in the radial direction, characterized in that the optical waveguides (LW1-LW4) are inserted in the assembled ribbon (B11) in such a way that the optical waveguides (for example, LW1) of the ribbon (B11) which are on the outside seen in the radial direction have a greater length than the optical waveguides (for example, LW4) of said ribbon which are on the inside.

2. Optical cable according to Claim 1, characterized in that the length of the optical waveguides increases from the inside outwards to precisely the extent to which the associated path occupied by the optical waveguide in the finished cable is longer than in the case of the optical waveguide respectively situated further inwards.

3. Optical cable according to one of the preceding claims, characterized in that the optical waveguide ribbons are arranged with their inner ends directly abutting one another, and in that a gap is produced further on the outside.

4. Optical cable according to Claim 3, characterized in that one further or further optical waveguide ribbon(s) (BA1m) whose radial extent is less than that of the two neighbouring ribbons (B1m, B11) is/are arranged in the gap between two neighbouring optical waveguide ribbons (B1m, B11).

5. Optical cable according to one of Claims 3 or 4, characterized in that additional narrower ribbons are arranged in the resulting gaps in such a way that with their end which is on the inside seen radially they abut the broader ribbons (B1m-B11).

6. Optical cable according to Claim 5, characterized in that the narrower ribbons (BF11b, BF11c) are of wedge-shaped configuration.

7. Optical cable according to Claim 6, characterized in that the configuration of the wedge-shaped ribbons is selected such that no interstices remain, that is to say a closed structure is produced.

8. Optical cable according to one of Claims 1 to 6, characterized in that the ribbons (BC11) are constructed thickened in the outer region in such a way that it is possible within a ribbon for more optical waveguides to be accommodated on the outside than in the inner region.

9. Optical cable according to Claim 8, characterized in that the ribbons (BC11) are constructed folded over in their outer region.

10. Optical cable according to Claim 8, characterized in that the ribbons (BE11) have a wedge-shaped structure such that they are constructed broadened in the outer region and narrower in the inner region.

11. Optical cable according to one of Claims 6 to 10, characterized in that seen radially the wedge-shaped ribbons have fewer optical waveguides on the inside and more optical waveguides on the outside.

12. Optical cable according to one of the preceding claims, characterized in that the ribbons are accommodated in a core element (SC6) which has chambers (CA61-CA66) which are opened outwards and serve the purpose of receiving the ribbons.

13. Optical cable according to one of Claims 1 to 11, characterized in that the optical waveguide ribbons are accommodated in a core element (SC7) which has chambers (CA71-CA76) which are open inwards, and in that the ribbons are inserted into these chambers.

14. Optical cable according to one of the preceding claims, characterized in that in the case of SZ stranding the ribbons are arranged in an angular range of ± 20° with reference to the exact radial direction.

15. Optical cable according to Claims 1 to 13, characterized in that in the case of Lang lay stranding the ribbons are arranged in an angular range of ± 70° with reference to the exact radial direction.

16. Optical cable according to one of the preceding claims, characterized in that between 4 and 12 optical waveguides are accommodated in a ribbon.

17. Optical cable according to one of the preceding claims, characterized in that at least one tension-proof element (CE) is provided in the region of the cable core.

18. Optical cable according to Claim 17, characterized in that the tension-proof element (CE) is arranged in the centre of the cable core.

19. Optical cable according to one of the preceding claims, characterized in that spacers (BI, BO) extending in the radial direction are provided as support elements.

20. Optical cable according to one of the preceding claims, characterized in that at least one further layer is provided of ribbons (BU1-BUp) which extend in the circumferential direction and are constructed and arranged in accordance with the ribbons (B11 to B1m) of Claims 1 to 19.

21. Method for producing ribbons for an optical cable according to one of the preceding claims, in which a number of individual optical waveguides are fed to a coating device which serves the purpose of applying the jacket which ensures the cohesion of the individual optical waveguides, it being the case that within a given time a greater length of coating material is applied for optical waveguides situated later radially outwards in the cable than for the optical waveguides situated later further inwards radially in the cable, and that with respect to the ribbon respectively to be produced the optical waveguides situated later radially outwards in the cable are inserted into the respective ribbon with a greater length than the optical waveguides situated later radially inwards.

22. Method according to Claim 21, in which after the application of the jacket for the optical waveguides, the optical waveguide ribbons are deposited in an annular fashion in such a way that the optical waveguides remain essentially free from tension inside the ribbon.

23. Method according to Claim 22, in which deposition is undertaken on a plate.

24. Method according to Claim 22, in which deposition is undertaken on a drum in such a way that the optical waveguides situated later inwards in the cable core rest likewise on the inside on the drum.

25. Method for producing an optical cable according to one of Claims 1 to 20, in which ribbons produced according to one of Claims 21 to 24 are brought into an arrangement extending radially with reference to the cable axis in such a way that, seen in the circumferential direction, as dense a packing as possible is achieved.

26. Method according to Claim 25, in which initially a first layer (BI) of radially extending ribbons is inserted into the cable core, and at least one further layer (BO) with ribbons likewise extending radially is applied to this first layer (BI).

27. Method according to Claims 25 to 26, in which initially a central element (SC6) provided with chambers which are open radially outwards is produced, and the ribbons extending with their broad sides essentially in the radial direction are inserted into the chambers which are open radially outwards.

28. Method according to one of Claims 25 to 27, in which a central body (SC7) is provided which has chambers (CA71-CA76) which are open radially inwards and in which the optical waveguide ribbons are arranged with their broad sides extending in an essentially radial direction.

## Revendications

1. Câble optique (OC) comportant une âme de câble dans laquelle on dispose un certain nombre de bandes (B11 à B1m) qui contiennent chacune plusieurs guides d'ondes lumineuses (LW1 à LW4) et qui par leur côté large s'étendent sensiblement en direction radiale vers l'extérieur,
caractérisé par le fait que les guides d'ondes lumineuses (LW1 à LW4) sont insérés dans la bande préfabriquée (B11) de telle sorte que les guides d'ondes lumineuses de la bande (B11) qui, vus en direction radiale, sont situés à l'extérieur (par exemple LW1) aient une longueur supérieure aux guides d'ondes lumineuses situés à l'intérieur de la bande (par exemple LW4).

2. Câble optique selon la revendication 1,
caractérisé par le fait que la longueur des guides d'ondes lumineuses augmente de l'intérieur à l'extérieur exactement dans la même proportion que la voie associée occupée par le guide d'ondes lumineuses dans le câble fini, qui est plus longue que celle du guide d'ondes lumineuses situé respectivement plus à l'intérieur.

3. Câble optique selon l'une des revendications précédentes,
caractérisé par le fait que les bandes de guides d'ondes lumineuses sont disposées en étant directement accolées les unes aux autres par leurs extrémités intérieures, et qu'une fente est engendrée plus à l'extérieur.

4. Câble optique selon la revendication 3,
caractérisé par le fait qu'entre deux bandes (B1m, B11) voisines de guides d'ondes lumineuses, une autre ou d'autres bandes de guides d'ondes lumineuses (BA1m) est (sont) disposée(s) dans la fente, dont l'extension radiale est plus faible que celle des deux bandes (B1m, B11) voisines.

5. Câble optique selon l'une des revendications 3 ou 4,
caractérisé par le fait que des bandes supplémentaires plus étroites sont disposées dans la fente engendrée, de telle sorte que, vues par leur extrémité radiale intérieure, elles soient accolées aux bandes (B1m, B11) plus larges.

6. Câble optique selon la revendication 5,
caractérisé par le fait que les bandes plus étroites (BF11b, BF11c) ont un profil cunéiforme.

7. Câble optique selon la revendication 6,
caractérisé par le fait que le profil des bandes cunéiformes est choisi de telle sorte qu'il ne subsiste pas d'interstices, à savoir qu'on obtient une structure fermée.

8. Câble optique selon l'une quelconque des revendications 1 à 6,
caractérisé par le fait que les bandes (BC11) sont épaissies dans leur zone extérieure, de telle sorte qu'il est possible de loger plus de guides d'ondes lumineuses à l'extérieur d'une bande que dans la zone intérieure.

9. Câble optique selon la revendication 8,
caractérisé par le fait que les bandes (BC11) sont repliées dans leur zone extérieure.

10. Câble optique selon la revendication 8,
caractérisé par le fait que les bandes (BE11) ont une structure cunéiforme, de telle sorte qu'elles sont plus larges dans leur zone extérieure et plus étroites dans leur zone intérieure.

11. Câble optique selon l'une quelconque des revendications 6 à 10,
caractérisé par le fait que, vues dans la direction radiale, les bandes cunéiformes comportent moins de guides d'ondes lumineuses à l'intérieur et plus de guides d'ondes lumineuses à l'extérieur.

12. Câble optique selon l'une quelconque des revendications précédentes,
caractérisé par le fait que les bandes sont logées dans un élément de coeur (SC6) qui comporte des chambres (CA61 à CA66) ouvertes vers l'extérieur, lesquelles servent à la réception des bandes.

13. Câble optique selon l'une quelconque des revendications 1 à 11,
caractérisé par le fait que les bandes de guides d'ondes lumineuses sont logées dans un élément de coeur (SC7) qui comporte des chambres (CA71 à CA76) ouvertes vers l'intérieur, et que les bandes sont insérées dans ces chambres.

14. Câble optique selon l'une quelconque des revendications précédentes,
caractérisé par le fait que dans le cas d'un câblage SZ, les bandes sont disposées dans une zone angulaire de ± 20° par rapport à la direction radiale exacte.

15. Câble optique selon l'une quelconque des revendications 1 à 13,
caractérisé par le fait que dans le cas d'un câblage à pas égal, les bandes sont disposées dans une zone angulaire de ± 70° par rapport à la direction radiale exacte.

16. Câble optique selon l'une quelconque des revendications précédentes,
caractérisé par le fait que 4 à 12 guides d'ondes lumineuses sont logés dans une bande.

17. Câble optique selon l'une quelconque des revendications précédentes,
caractérisé par le fait qu'on prévoit au moins un élément (CE) de résistance à la traction dans la zone de l'âme du câble.

18. Câble optique selon la revendication 17,
caractérisé par le fait que l'élément (CE) de résistance à la traction est disposé au centre de l'âme du câble.

19. Câble optique selon l'une quelconque des revendications précédentes,
caractérisé par le fait que des écarteurs (BI, BO) s'étendant dans la direction radiale sont prévus en tant qu'éléments d'appui.

20. Câble optique selon l'une quelconque des revendications précédentes,
caractérisé par le fait qu'il est prévu au moins une autre couche de bandes (BU1 à BUp) s'étendant dans la direction circonférentielle, qui sont conçues et disposées comme les bandes (B11 à B1m) des revendications 1 à 19.

21. Procédé de fabrication de bandes pour un câble optique suivant l'une quelconque des revendications précédentes, selon lequel un certain nombre de guides d'ondes lumineuses individuels est amené à un dispositif de revêtement qui sert à l'application du gainage assurant la cohésion des guides d'ondes lumineuses individuels, une longueur plus importante de matériau de revêtement étant appliquée dans un intervalle de temps donné pour les guides d'ondes lumineuses qui seront ultérieurement situés radialement à l'extérieur dans le câble, que pour les guides d'ondes lumineuses qui seront ultérieurement situés radialement plus à l'intérieur dans le câble, et selon lequel, lors du processus de revêtement de la bande à fabriquer, les guides d'ondes lumineuses qui seront ultérieurement situés radialement à l'extérieur dans le câble sont insérés sur une longueur plus importante dans la bande respective que les guides d'ondes lumineuses qui seront ultérieurement situés radialement à l'intérieur.

22. Procédé suivant la revendication 21, selon lequel, après l'application du gainage pour les guides d'ondes lumineuses, la bande des guides d'ondes lumineuses est déposée sous une forme annulaire de telle sorte que les guides d'ondes lumineuses soient pour l'essentiel disposés sans contrainte de traction dans la bande.

23. Procédé suivant la revendication 22, selon lequel on effectue une dépose sur un disque.

24. Procédé suivant la revendication 22, selon lequel on effectue une dépose sur un tambour, de telle sorte que les guides d'ondes lumineuses qui seront ultérieurement situés à l'intérieur dans l'âme du câble soient également à l'intérieur sur le tambour.

25. Procédé destiné à la fabrication d'un câble optique suivant l'une quelconque des revendications 1 à 20, selon lequel des bandes fabriquées suivant l'une des revendications 21 à 24 sont placées dans une disposition s'étendant radialement par rapport à l'axe du câble de telle sorte que, vue dans la direction circonférentielle, on obtien un tassement aussi important que possible.

26. Procédé suivant la revendication 25, selon lequel on insère dans un premier temps dans l'âme du câble une première couche (BI) de bandes s'étendant radialement, et sur cette première couche (BI) on dépose au moins une autre couche (BO) comportant des bandes qui s'étendent également radialement.

27. Procédé suivant l'une des revendications 25 et 26, selon lequel, dans un premier temps, on fabrique un élément central (SC6) pourvu de chambres ouvertes radialement vers l'extérieur, les bandes, qui par leur côté large s'étendent sensiblement en direction radiale, étant ensuite insérées dans les chambres ouvertes radialement vers l'extérieur.

28. Procédé suivant l'une des revendications 25 à 27, selon lequel on prévoit un corps central (SC7) qui comporte des chambres (CA71 à CA76) ouvertes radialement vers l'intérieur, dans lesquelles sont disposées les bandes de guides d'ondes lumineuses qui par leur côté large s'étendent sensiblement en direction radiale.
